# EUROPEAN PATENT APPLICATION

(11) **EP 4 786 374 A1**
(43) Date of publication of application: **05.08.2026**
(21) Application number: 24869433.3
(22) Date of filing: 24.12.2024
(51) Int. Cl.: B65G 1/08, B65G 47/88

(54) **REPLENISHER, REPLENISHMENT SYSTEM, REPLENISHMENT CONTROL METHOD AND CONTROLLER**

(30) Priority: 16.12.2024 CN 202411856205
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: LIANG, Zhe, Beijing 100176 (CN)
(74) Representative: Page White Farrer
(86) International application number: PCT/CN2024/141670
(87) International publication number: WO 2026/129382

(57) **Abstract**

The embodiments of the present application disclose a replenisher, a replenishment system, a replenishment control method and a controller. One embodiment of the replenisher includes that: the channel assembly including a bottom plate and two side plates, wherein the two side plates are arranged on an upper surface of the bottom plate at intervals to form an article channel for accommodating articles; a press roller assembly including a press roller, a lifting drive mechanism and a rotary drive mechanism, wherein the press roller is arranged above a position of the article channel close to a delivery port, the lifting drive mechanism is configured to adjust a height of the press roller from the article channel, and the rotary drive mechanism is configured to control rotation of the press roller; and a stopper arranged at the delivery port to block the delivery port, such that the articles are stooped in the article channel; wherein during a delivery process, the stopper stops shielding, and the press roller is in contact with a surface of the articles in the article channel and rotates to move the articles in the article channel out of the delivery port.

## Description

### CROSS-REFERENCE TO RELATED APPLICATIONS

The present application claims priority to China Patent Application No. 202411856205X filed on December 16, 2024, the invention title of which is "REPLENISHER, REPLENISHMENT SYSTEM, REPLENISHMENT CONTROL METHOD AND CONTROLLER", and which is incorporated by reference in the present application in its entirety.

### TECHNICAL FIELD

The embodiments of the present application relate to the field of warehousing technology, in particular to a replenisher, a replenishment system, a replenishment control method and a controller.

### BACKGROUND

With the continuous development of automation technology, more and more industries use automatic devices to replace labor. For example, the automatic replenishment and pickup system with a gravity inclined shelf is generally applied to storage and automatic delivery of regular and small-size articles, such as medicine and contact lenses.

The above information disclosed in the background is only for enhancing understanding of the background of the present inventive concept, and therefore, it may contain information that does not form the prior art that is known to those of ordinary skill in the art.

### SUMMARY

The summary of the present application is used to introduce concepts in a concise form, which will be described in detail in the following detailed description. The summary of the present application is neither intended to identify the key features or essential features of the technical solution for which protection is sought, nor intended to limit the scope of the technical solution for which protection is sought. In some embodiments of the present application, a replenisher, a replenishment system, a replenishment control method, a controller, a computer-readable medium and a computer program product are provided to solve one or more of the technical problems mentioned in the background above.

In a first aspect, some embodiments of the present application provide a replenisher, including: a channel assembly including a bottom plate and two side plates, wherein the two side plates are arranged on an upper surface of the bottom plate at intervals to form an article channel for accommodating a articles, and wherein a cross beam is provided above a position of the article channel close to the delivery port; a press roller assembly including a press roller, a lifting drive mechanism and a rotary drive mechanism, wherein the press roller is arranged above a position of the article channel close to a delivery port, the lifting drive mechanism is configured to adjust a height of the press roller from the article channel, and the rotary drive mechanism is configured to control rotation of the press roller; and a stopper arranged at the delivery port to block the delivery port, such that the articles are stooped in the article channel; wherein during a delivery process, the stopper stops blocking, and the press roller is in contact with a surface of the articles in the article channel and rotates to move a specified number of articles in the article channel out of the delivery port.

In a second aspect, some embodiments of the present application provide a replenishment system including: a shelf, on which a plurality of article channels for storing the articles are arranged so as to pick up the articles from a front side of the shelf; at least one replenisher arranged at a rear side of the shelf through a movement mechanism, and configured to replenish the articles to the article channels on the shelf, wherein the replenisher is the replenisher according to any implementation in the above-described first aspect, and a height of the delivery port of the replenisher is lower than a height of a feeding port, wherein the movement mechanism is configured to drive the replenisher to move along a width direction and a height direction of the shelf.

In a third aspect, some embodiments of the present application provide a replenishment control method for the replenisher according to any implementation in the above-described first aspect, including: controlling the stopper to be in a shielding state and the press roller to be in an ascending state while picking up articles; controlling the press roller to be in a descending state to press on the first article in an article channel in the case where articles picking is completed; controlling the stopper to be in a non-shielding state, so as to dock with the article channel of the replenisher with an article channel of a shelf, and controlling the press roller to rotate in a direction away from the delivery port, so as to remove the articles in the article channel from the delivery port while replenishing articles.

In a fourth aspect, some embodiments of the present application provide a controller, including: at least one processor; a storage with at least one program stored thereon, when the at least one program is executed by the at least one processor, the replenishment control method described in the above-described third aspect is implemented by the at least one processor.

In a fifth aspect, some embodiments of the present application provide a computer-readable medium with a computer program stored thereon, wherein the computer program, when executed by a processor, implements the replenishment control method described in the above-described third aspect.

In a sixth aspect, some embodiments of the present application provide a computer program product including a computer program that, when executed by a processor, implements the replenishment control method described in the above-described third aspect.

### BRIEF DESCRIPTION OF THE DRAWINGS

The above-described and other features, advantages and aspects of embodiments of the present application will become more apparent in conjunction with the accompanying drawings and with reference to the following detailed description. Throughout the accompanying drawings, the same or similar reference numerals indicate the same or similar elements. It should be understood that the accompanying drawings are schematic, and the members and elements are not necessarily drawn to scale.
Fig. 1 is a schematic structural view of a replenisher of some embodiments in the present application;
Figs. 2A-2B are schematic structural views of a press roller assembly of some embodiments;
Figs. 3A-3B are schematic structural views of a pitch control assembly of some embodiments;
Figs. 4A-4D are schematic structural views of a door panel assembly of some embodiments;
Fig. 5 is a schematic structural view of a detection member at a delivery port of some embodiments;
Fig. 6 is a schematic structural view of a replenishment system of some embodiments in the present application;
Fig. 7 is a flowchart of a replenishment control method of some embodiments in the present application;
Fig. 8 is a schematic structural view of a controller configured to implement some embodiments of the present application.

### DETAILED DESCRIPTION

The embodiments of the present application will be described in more detail with reference to the accompanying drawings below. Although certain embodiments of the present application are shown in the accompanying drawings, it should be understood that the present application may be implemented in various forms and should not be construed as limited to the embodiments set forth here. Rather, these embodiments are provided for a more thorough and complete understanding of the present application. It should be understood that, the accompanying drawings and embodiments of the present application are only for exemplary purposes, rather than for limiting the protection scope of the present application.

In addition, it is also to be noted that, for ease of description, only parts related to the invention are shown in the accompanying drawings. In the case without a conflict, the embodiments in the present application and the features in the embodiments may be combined with each other.

It is to be noted that, the concepts such as "first" and "second" mentioned in the present application are only used to distinguish different devices, modules or units, but not to limit the order or interdependence of functions performed by these devices, modules or units.

It is to be noted that, the terms of "a" and "a plurality of" mentioned in the present application are illustrative rather than restrictive, and those skilled in the art should understand that they should be construed as "one or more" unless specified in the context otherwise.

The names of messages or information exchanged between multiple devices in the embodiments of the present application are only used for illustrative purposes, but not for limiting the scope of these messages or information.

The relevant automatic replenishment mechanisms often have poor control over the articles to be replenished, and usually have problems such as over-delivery and jamming, which affects production efficiency and has poor actual use effect.

In order to solve the problems described above, some embodiments of the present application provide a replenisher to improve an accuracy of delivery.

The present application will be described in detail below with reference to the accompanying drawings and in conjunction with the embodiments.

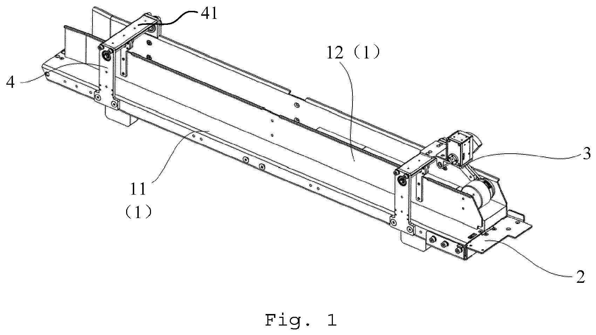

Fig. 1 shows a schematic structural view of a replenisher of some embodiments in the present application. As shown in Fig. 1, the replenisher includes a channel assembly 1, a stopper 2 and a press roller assembly 3. Here, the channel assembly 1 includes a bottom plate 11 and two side plates 12. The two side plates 12 are arranged on an upper surface of the bottom plate 11 at intervals and extend along a length direction of the bottom plate 11, thereby forming an article channel for accommodating articles. Wherein, the upper surface is usually a surface facing away from the ground during operation, opposite to the lower surface. It can be understood that, the two side plates 2 may be fixedly connected with the bottom plate 1, so as to form an article channel with a fixed width. Here, the fixing method of the side plate and the bottom plate is not limited, for example, the bottom plate may be provided with a slot or fixed by an L-shaped angle iron.

Here, the stopper 2 is arranged at a delivery port to block the delivery port. In this way, under a shielding effect of the stopper 2, the articles are stopped in the article channel. The structure of the stopper 2 here may be set according to actual requirements. As an example, the stopper 2 includes a baffle and a telescopic driving member. The bottom plate 11 is provided with a stop groove in the vicinity of the delivery port. In this case, the baffle is arranged in the stop groove, and one end away from the delivery port is hinged to the bottom plate. At the same time, one end of the telescopic driving member is connected with the baffle, and the other end is connected with a lower surface of the bottom plate. In this way, when the telescopic driving member stretches, the baffle is erected in the article channel, so as to block the delivery port. When the telescopic driving member contracts, the baffle is completely embedded in the stop groove, so as to stop shielding and form a flat article channel.

It can be understood that, the replenisher of the present application opens the baffle (that is, closing the delivery port) when an articles is picked up. In this way, after the articles enter the article channel of the replenisher sequentially, the articles are restricted in the article channel by the baffle, thereby preventing the articles from falling from the delivery port.

Alternatively, the press roller assembly 3 includes a press roller 31, a lifting drive mechanism and a rotary drive mechanism. The lifting drive mechanism 32 is configured to adjust a height of the press roller 31 from the article channel. The rotary drive mechanism is configured to control rotation of the press roller 31. As can be seen from Fig. 1, a cross beam 41 may be provided above a position of the article channel close to the delivery port. Here, the press roller 31 may be fixed on the side plate through a connector. As can be seen from Fig. 1, a fixing beam 41 may be provided above a position of the article channel close to the delivery port. Alternatively, the press roller 31 may be arranged at the delivery port through the fixing beam 41.

It is to be noted that, when the articles are picked up by the replenisher, that is, during the process of the articles entering the replenisher, the stopper blocks the delivery port, and the press roller 31 is raised, so that the articles in the article channel are arranged sequentially from the delivery port. When the shelf is replenished, under an action of the lifting drive mechanism, the press roller 31 is pressed down on the first article in the article channel, and the stopper stops shielding. At this time, the articles in the article channel are kept still in the article channel under an pressure effect of the press roller 31, so that the articles are prevented from falling from the article channel after the stopper stops shielding. During delivery, the press roller 31 rotates under the action of the rotary drive mechanism. In this way, the articles in the article channel are removed from the delivery port by a rotational friction force of the press roller 31. In this way, a replenishment pace is accurately controlled, and only by rotating the press roller by a fixed length (for example, a length of an article), a current article is pushed out and a next article is controlled to remain still in the article channel, thereby effectively reducing a phenomenon of over-delivery and jamming.

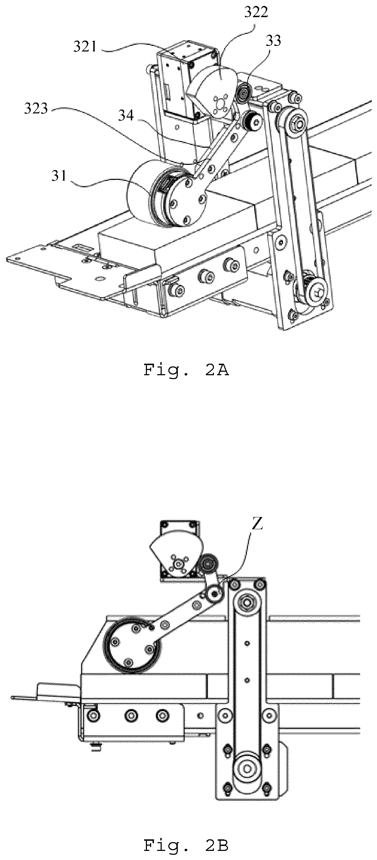

It can be understood that, the specific structure of each component of the replenisher in the present application may be set according to actual requirements. In some embodiments, as shown in Figs. 2A and 2B, the lifting drive mechanism includes a rotary drive member 321, a cam 322 and a swing arm 323. The rotary drive member may include but is not limited to a steering engine, an electric motor or a motor and the like. Here, the cam 322 is fixed on a spindle of the rotary drive member 321, and a protruding wheel surface of the cam 322 abuts against the swing arm 323 during a rotation process. One end of the swing arm 323 is hinged to the fixing beam 41, and the other end may be fixed with the rotary drive mechanism and the press roller 31. In this way, as the cam 322 rotates, the swing arm 323 is lifted or lowered, thereby realizing a height adjustment of the press roller 31.

As an example, the rotary drive member 321 and the cam 322 are mounted below the swing arm 323. For example, the rotary drive member 321 may be mounted on the side plate or a bracket of a gantry shown in the figures. In this case, when the protruding wheel surface of the cam 322 abuts against the swing arm 323, the swing arm 323 ascends accordingly. When the cam 322 rotates from the protruding wheel surface to the non-protruding wheel surface, the swing arm 323 descends accordingly.

Alternatively, the rotary drive member 321 and the cam 322 may be mounted above the swing arm 323. As shown in Figs. 2A and 2B, the rotary drive member 321 is fixed on the fixing beam 41 through a mounting plate. Here, the swing arm 323 is L-shaped, and the swing arm is hinged to the fixing beam at a corner Z. The press roller 31 is fixed at a longer side end of the swing arm 323, and an abutment wheel 33 is provided at a shorter side end of the swing arm 323. The cam 322 realizes a lifting control of the swing arm by get in contact with the abutment wheel 33. In this way, when the protruding wheel surface of the cam 322 is in contact with the abutment wheel 33, the abutment wheel 33 moves in a direction away from the delivery port about an articulation axis of the swing arm 323, and at the same time, the longer side of the swing arm ascends. On the contrary, the abutment wheel 33 moves in a direction close to the delivery port about the articulation axis of the swing arm 323, and at the same time, the longer side of the swing arm descends.

In some application scenarios, the lifting drive mechanism may also include an air cylinder and a connecting rod. The air cylinder may be fixed on the side plate or the fixing beam through a mounting plate. A piston rod of the air cylinder faces towards the article channel. The piston rod of the air cylinder is fixed with the press roller and the rotary drive mechanism through the connecting rod. In this way, by a telescopic movement of the piston rod, a pressing and lifting control of the press roller is realized.

In addition, in order to improve a reliability of the press roller pressing the articles, a counterweight 34 may be fixed on the above-described swing arm 323, so as to raise the pressure of the press roller. The weight, material and fixing method of the counterweight are also not limited. It is to be noted that, the rotary drive mechanism and the press roller in the embodiments may be a small integrated electric motor similar to a hub motor. In this way, it is possible to reduce the space occupation whilst satisfying the use requirements. In addition, a wheel sleeve (for example, a rubber wheel) with a large friction force may be sleeved outside the press roller 31, so as to increase a contact friction force.

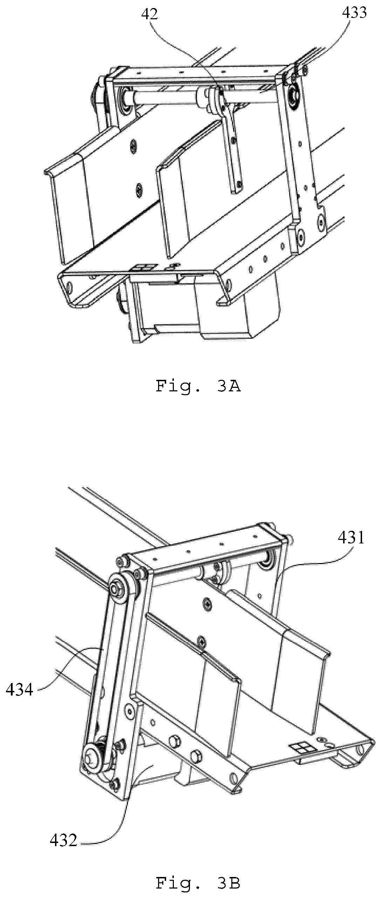

In some embodiments, in order to expand an application scope of the replenisher to be suitable for various dimensions and specifications of articles, in the two side plates of the replenisher of the present application, the first side plate (for example, a right side plate in Fig. 1) may be fixed with the bottom plate 11, and the second side plate (for example, a left side plate in Fig. 1) may be movably connected with the bottom plate 11. In this case, the replenisher may also include at least one pitch control assembly 4. As shown in Figs. 3A and 3B, the pitch control assembly 4 may include a support plate 42 and a pitch control driving mechanism. Here, the support plate 42 may be fixed with the second side plate. In this way, the second side plate is moved away from or close to the first side plate under an action of the pitch control driving mechanism, so as to control a width of the article channel.

As an example, the pitch control driving mechanism includes a gantry 431, a first driving motor 432 and a ball screw pair 433. The gantry 431 includes a bracket and a cross beam. The bracket is fixed on both sides of the bottom plate 11, and both ends of the cross beam are fixed on the bracket. That is, the gantry straddles above the article channel. It can be understood that, in order to simplify the structure of the device, the cross beam here may be reused as the above-described fixing beam 41, that is, the cross beam and the fixing beam may be the same member. Here, both ends of the lead screw in the ball screw pair 433 is fixed on the bracket and located below the cross beam 41. In addition, a nut in the ball screw pair 433 is sleeved on the lead screw and connected with the support plate 42. The first driving motor 432 is fixed on a lower surface of the bottom plate 11, and a spindle of the first driving motor is connected with one end of the lead screw through a transmission belt 434. In this way, not only an accuracy of the pitch control movement is ensured, but also an interference with the articles in the article channel is avoided.

Alternatively, the support plate may be provided with a guide block. At the same time, the bottom plate may be provided with a guide slot. The pitch control driving mechanism may be an air cylinder arranged on one side of the bottom plate close to the second side plate. That is, the second side plate is located between the air cylinder and the first side plate, so as to avoid affecting the articles in the article channel. In order to realize the pitch control movement of the second side plate, a piston rod of the air cylinder may face toward the second side plate and be connected with the support plate. In this way, by way of a telescopic movement of the piston rod, the second side plate is driven to move, so as to realize an adjustment of a width of the article channel.

It can be understood that, the replenisher of the present application may be provided with one pitch control assembly at an intermediate position of the article channel. Alternatively, in order to improve an efficiency and stability of pitch control, the replenisher may include two pitch control assemblies. The two pitch control assemblies may be arranged at the delivery port and a feeding port of the article channel respectively. In other words, the two pitch control assemblies have the same structure but are arranged at different positions, which are located at both ends of the replenisher respectively. The two pitch control assemblies are provided with drives respectively, and are synchronously controlled to drive the pitch control side plate (the second side plate) to move.

It is to be noted that, when the articles are picked up by the replenisher of the present application, the second side plate may be moved to a certain position as needed, so that the articles with corresponding specifications are adequately accommodated. After the articles are picked up, the second side plate may be moved inward (that is, in a direction close to the first side plate) to clamp the articles, thus playing a role in organizing, and making the articles in the article channel neatly arranged. Afterwards, the second side plate is moved outward (that is, in a direction away from the first side plate) by a short distance so as to leave a small gap with the articles. In this way, when the shelves are replenished, the articles are guided.

In some embodiments, the above-described stopper 2 is a door panel assembly. The door panel assembly includes a door panel 21 and a door panel driving mechanism. The door panel 21 is movably arranged at the delivery port of the article channel. Under an action of the door panel driving mechanism, the door panel 21 is driven to move, so as to control an opening and closing of the delivery port.

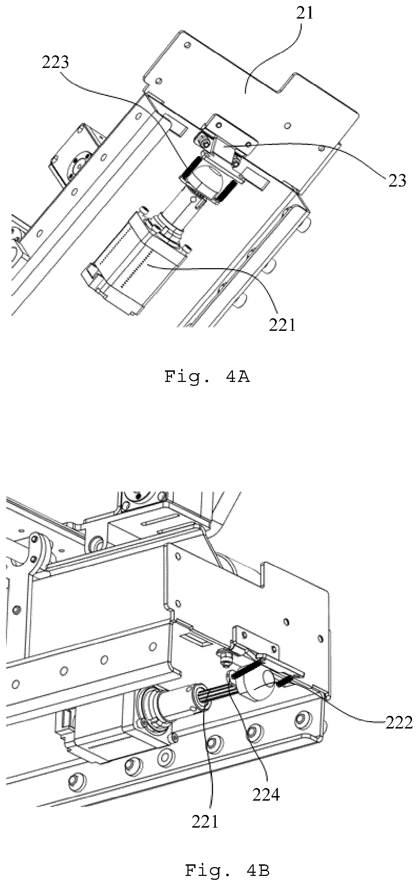

As an example, as shown in Figs. 4A to 4C, a bottom end of the door panel 21 is hinged to an end of the bottom panel 11 located at the delivery port, and a lower surface of the door panel 21 is provided with a mounting plate 23. Here, the door panel driving mechanism includes a second driving motor 221, a convex ball 222 and an elastic member 223. The second driving motor 221 may be fixed on a lower surface of the bottom plate 11. The convex ball 222 may be arranged at an end of a spindle of the second driving motor 221. Meanwhile, the convex ball 222 may be connected with the mounting plate 23 through the elastic member 223. In this way, the spindle of the second driving motor 221 implements telescopic motion, so that the door panel 21 is controlled to flip, so as to realize the opening and closing of the delivery port.

As shown in Fig. 4A, when the door panel 21 needs to be opened, the spindle of the second driving motor 221 is retracted inward. In this state, the convex ball 222 and the mounting plate 23 are usually in a separated state. At this time, the mounting plate 23 is pulled by the elastic member 223 to drive the door panel 21 to open. In other words, a complete opening of the door panel 21 mainly depends on a pulling force of the elastic member. As shown in Fig. 4B, when the door panel 21 needs to be closed, the spindle of the second driving motor 221 stretches outward. In this state, the convex ball 222 is in contact with the mounting plate 23 and pushes the mounting plate 23 to move in a direction away from the bottom plate, so as to drive the door panel 21 to close.

It can be understood that, the door panel driving mechanism of the present application uses a non-contact drive, which effectively reduces a damage of a hinge and the door panel, and a driving direction is a linear drive, which is compact and saves an installation space. That is, by combining the elastic member 223 and the convex ball 222 in the structure, the door panel is opened and closed more linearly and flexibly, which avoids the damage to the articulation when the door is closed in a hard connection circumstance. The elastic member may have a pre-tightening tension. In this way, when the door is opened, a tension is provided to ensure that the door panel completely opens to dock with the article channel, and it is also helpful to a stable contact between the convex ball and the mounting plate during a closing process. This structural design occupies a small space, and the door is opened and closed stably with a long service life.

As is known from the above-described description, in order to realize the opening and closing of the door panel, the above-described mounting plate 23 is usually not a flat plate. As can be seen from the figures, the mounting plate here is usually formed with a plurality of (at least two) planes with different angles. An included angle between the plane fixed to the door panel and the plane connected to the convex ball is usually greater than 90° and less than 180°. In addition, the above-described elastic member may also be set according to actual needs, for example, a spring, a rubber strip, a rubber band and the like. In some embodiments, in order to ensure the stability of the opening and closing movement of the door panel and prolong the service life of the elastic member, as shown in the figures, the elastic member 223 is arranged on both sides of the convex ball 222 through the fixing plate 224. Wherein, the fixing plate 224 is located between the convex ball 222 and the second driving motor 221.

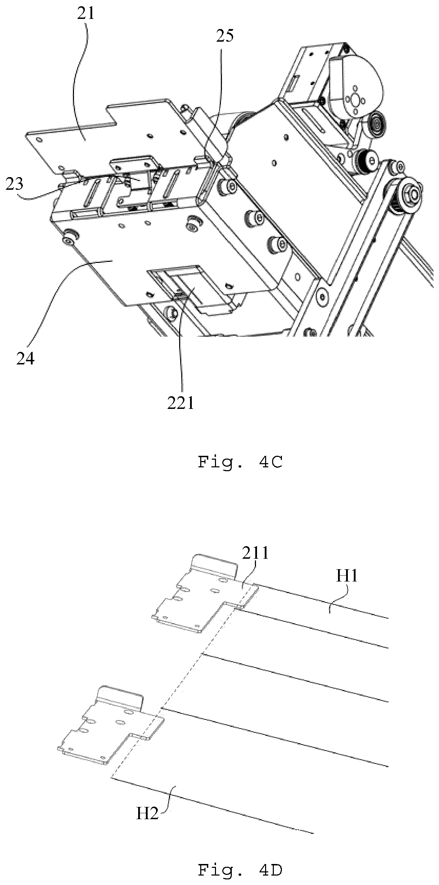

Alternatively, as shown in Fig. 4D, a top end of the door panel 21 is provided with a flange 211, and a width of the flange 211 is smaller than a width of the article channel on the docking shelf. That is, the width of the flange 211 is smaller than the width of the narrowest article channel on the shelf. This design is to be adapted to the docking of article channels with different widths. As shown in Fig. 4D, when the narrower article channel H1 (that is, an upper part of the figure) is docked, the flange serves as a support for connecting the article channel. When the wider article channel H2 is docked (that is, a lower half of the figure), although there is a small slit at a lapped joint position, it does not affect safe passage of the articles. If this design is not used, a front end with a uniform width will be used. If it is unified to a width of the wider article channel, when the narrower article channel is docked, the door panel will not be docked due to the obstruction of the side plate of the article channel, the side plate of the article channel for guidance is set at a black line in the figure). If it is designed according to a width of the narrower article channel, when the wider article channel is docked, the docking will be incomplete, and wider articles will easily fall off. At the same time, since the whole replenisher does not have a movement mechanism towards or away from the shelf, the door panel may be designed to be longer during the design. In this way, during the docking with the shelf, a small part of the flange penetrates into the port of the article channel of the shelf. That is, when the door panel is opened and docked with the shelf, the flange on the door panel extends into the article channel of the shelf, as shown by the dotted line in the figure. This may also better adapt to a deformation of the article channel of the shelf and make the docking more stable.

In some embodiments, as shown in Fig. 4C, the replenisher of the present application is further provided with an outer casing 24. Here, the outer casing 24 is mounted on the lower surface of the bottom plate and arranged around the door panel driving mechanism. In this way, a protective effect is provided for the mechanism. In addition, in order to ensure the stability of the flip movement of the door panel, a limiting support member 25 is arranged at the delivery port. The limiting support member 25 is configured to limit an opening position of the door panel 21 and support the opened door panel 21. That is, under the strain of the elastic member and the action of the support member, the door panel is stably positioned at the position where the door is opened to dock with the bottom plate of the article channel of the shelf, and connect the article channel of the replenisher and the article channel of the shelf. It can be understood that, the above-described limiting support member 25 may be mounted on the lower surface of the bottom plate at the delivery port or mounted on the above-described outer casing 24.

In some alternative implementations, the second driving motor is fixed on the upper surface of the bottom plate and located on one side of the delivery port. The spindle of the second driving motor is fixedly connected with one side of the door panel. At the same time, the bottom plate is provided with a guide groove adapted to the bottom end of the door panel at the delivery port. Wherein, an extending direction of the guide groove is perpendicular to a length direction of the bottom plate. In this way, along with a telescopic movement of the spindle of the second driving motor, the door panel is driven to move left and right along the guide groove, so as to realize the opening and closing control of the delivery port. Alternatively, the second driving motor is arranged above the delivery port, and the spindle is connected with a top end of the door panel. In this way, along with a telescopic movement of the spindle, the door panel is also driven to move up and down, so as to realize the opening and closing control of the delivery port.

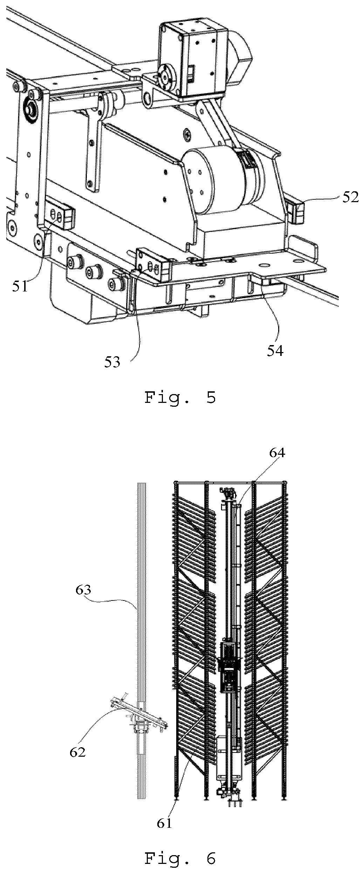

In some embodiments, in order to ensure the accuracy of the movement of each mechanism, the replenisher of the present application is provided with various detection members. As an example, as shown in Fig. 5, a first detection member 51 is disposed outside the article channel to detect a change distance of the second side plate, for example, calibrating a movement distance or zeroing of the second side plate. The first detection member 51 may be fixed on the bottom plate or the gantry, and the detection head faces towards the second side plate.

For another example, a second detection member 52, a third detection member 53 and a fourth detection member 54 is provided at the delivery port. Wherein, the second detection member 52 is configured to detect the opening and closing state of the door panel, for example, detecting whether the door panel is closed in place. The second detection member 52 may be fixed on the side plate (for example, the first side plate) or the bottom plate, and the detection head faces towards the door panel. The third detection member 53 is configured to detect an information of the articles passing through the delivery port, for example, detecting whether the articles are stuck, or counting the articles. The third detection member 53 may also be arranged on the bottom plate, or may be arranged on a side surface facing towards the feeding port when the door panel is closed, and a direction of the detection head is perpendicular to the movement direction of the articles. The fourth detection member 54 here is configured to detect an information of the article channel of the docking shelf, for example, inspecting whether the information of the article channel is accurate, whether replenishment is required, and the like. The fourth detection member 54 may be arranged on a side surface facing away from the feeding port when the door panel is closed, and the detection head faces towards the top end of the door panel. In this way, when the door panel is opened and docked with the shelf, the detection head of the fourth detection member faces toward the article channel of the shelf, so as to perform detection through the slit between the door panel and the article channel of the shelf.

It can be understood that, the detection methods of the above-described various detection members may also be set according to actual needs. For example, the first and second detection members may be proximity switches. The third detection member may be a photoelectric sensor. The fourth detection member 54 may be a range sensor. In the case where the door panel is opened, a detection light enters the article channel of the shelf to detect a distance of the articles in the article channel. In this case, the sensor monitors the distance data all the time, so as to prevent an inaccurate detection and false replenishment caused by problems such as the deformation of the article channel.

Some embodiments of the present application also provide a replenishment system. As shown in Fig. 6, the replenishment system includes a shelf 61, at least one replenisher 62 and a movement mechanism 63. As can be seen from Fig. 6, a plurality of article channels for storing the articles are arranged on the shelf 61. A pick-up mechanism 64 may be provided between two shelves to pick up articles from a front side of the shelf. The movement mechanism 63 is arranged at a rear side of the shelf 61. The movement mechanism 63 is configured to drive the replenisher 62 to move along a width direction and a height direction of the shelf 61. At least one replenisher 62 is mounted on the movement mechanism 63 to replenish the articles to the article channels on the shelf. The replenisher here is the replenisher described according to any implementation in the above-described embodiments. Moreover, a height of the delivery port of the replenisher is lower than a height of the feeding port, so that the articles in the article channel slides along the article channel under the action of their own gravity, and there is no need to additionally provide a driving mechanism, thereby simplifying the structure of the device and reduces the cost of the device.

It is to be noted that, the structure of the above-described movement mechanism 63 is also not limited. For example, the movement mechanism may include a horizontal walking mechanism and a lifting mechanism. The horizontal walking mechanism may include a horizontal track and a walking trolley. The lifting mechanism may be fixed on the walking trolley. The replenisher may be mounted on the lifting mechanism. In this way, the movement mechanism drives the replenisher to move along the surface of the shelf and move up and down. Therefore, the replenisher reaches a replenishment position of any article channel on the shelf.

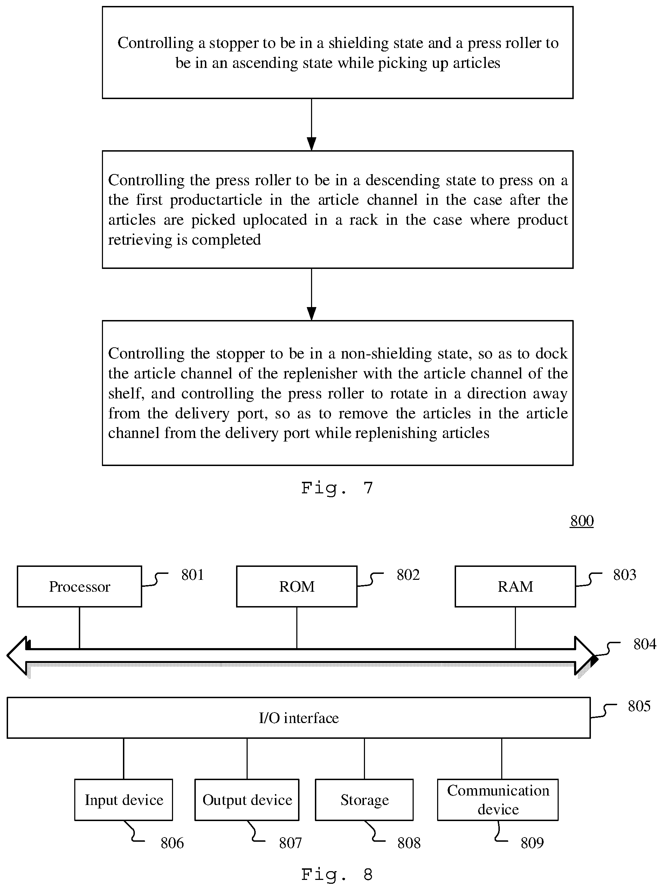

Some embodiments of the present application also provide a replenishment control method. The replenishment control method is for the replenisher described according to any implementation in the above-described embodiments. As shown in Fig. 7, the method includes the following steps:

While picking up articles, controlling the stopper to be in a shielding state and the press roller to be in an ascending state.

After the articles are picked up, controlling the press roller to be in a descending state to press on the first article in the article channel.

While replenishing articles, controlling the stopper to be in a non-shielding state, so as to dock with the article channel of the replenisher with the article channel of the shelf, and controlling the press roller to rotate in a direction away from the delivery port, so as to remove the articles in the article channel from the delivery port.

Alternatively, during the replenishment process, a rotation number of the press roller is controlled according to a replenishment number and length dimensions of the articles, so as to move the replenishment number of articles to the article channel of the shelf. In this way, it is possible to accurately control the replenishment progress. Wherein, the length dimensions of the articles are the dimensions of the articles in an extension direction of the article channel.

In addition, during the process of picking up articles (that is, before the articles enters the article channel), the second side plate may be controlled to move according to width dimensions of the articles to be picked up, so that a width of the article channel is greater than the widths of the articles to be picked up. Moreover, in the case where the articles have been picked up, the second side plate may be controlled to move towards a direction close to the first side plate again, so that the articles in the article channel are regularly arranged, so as to facilitate subsequent delivery control. Further, after sorting is completed, the second side plate is then controlled to move a certain distance towards a direction away from the first side plate. For the specific process, reference may be made to the relevant descriptions in the above-described embodiments, which will not be described in detail here.

Next, referring to Fig. 8, which shows a schematic structural view of a controller 800 configured to implement some embodiments of the present application. The controller shown in Fig. 8 is only an example, and shall not limit the functions and application range of the embodiments of the present application.

As shown in Fig. 8, the controller 800 includes a processor 801 (for example, a central processor, a graphic processor, and the like), which performs various suitable actions and processing according to a program stored in a Read-only Memory (ROM) 802 or a program loaded from a storage 808 into a Random Access Memory (RAM) 803. In the RAM 803, various programs and data required for the operation of the controller 800 are also stored. The processor 801, the ROM 802 and the RAM 803 are connected to each other through a bus 804. An input/output (I/O) interface 805 is also connected to the bus 804.

Generally, the following devices may be connected to the I/O interface 805: an input device 806 including, for example, a touch screen, a touch pad, a keyboard, a mouse, a camera, a microphone, an accelerometer, a gyroscope, and the like; an output device 807 including, for example, a speaker, a vibrator, and the like; a storage 808 including, for example, a magnetic disk, a hard disk, a memory card, and the like; and a communication device 809. The communication device 809 allows the controller 800 to be in wireless or wired communication with other devices to exchange data. Although Fig. 8 shows the controller 800 with various devices, it should be understood that it is not required to implement or possess all the devices shown. It is possible to alternatively implement or possess more or less devices. Each block shown in Fig. 8 may represent one device or a plurality of devices as required.

In particular, according to some embodiments of the present application, the process described above with reference to the flowchart may be implemented as a computer software program. For example, some embodiments of the present application include a computer program product including a computer program carried on a computer-readable medium, wherein the computer program contains program codes for performing the method shown in the flowchart. In such embodiments, the computer program may be downloaded and mounted from the network through the communication device 809, mounted from the storage 808, or mounted from the ROM 802. When the computer program is executed by the processing device 801, the above-described functions defined in the method according to some embodiments of the present application are performed.

It is to be noted that, the computer-readable medium recited in some embodiments of the present application may be a computer-readable signal medium, a computer-readable storage medium or any combination thereof. The computer-readable storage medium may be, for example, but is not limited to: an electrical, magnetic, optical, electromagnetic, infrared, or semiconductor system, device, or apparatus, or a combination thereof. More specific examples of the computer-readable storage medium may include, but are not limited to: an electrical connection having at least one wire, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage, a magnetic storage, or any suitable combination thereof. In some embodiments of the present application, a computer-readable storage medium may be any tangible medium that contains or stores a program which is used by an instruction execution system, apparatus, or device or used in combination therewith. In some embodiments of the present application, the computer-readable signal medium may include a data signal propagated in a baseband or as a part of a carrier wave, wherein a computer-readable program code is carried. Such propagated data signal may be in various forms, including but not limited to an electromagnetic signal, an optical signal, or any suitable combination thereof. The computer-readable signal medium may be any computer-readable medium other than the computer-readable storage medium. The computer-readable signal medium may send, propagate, or transmit a program for use by an instruction execution system, apparatus, or device or in combination with therewith. The program code contained on the computer-readable medium may be transmitted by any suitable medium, including but not limited to: a wire, an optical cable, radio frequency (RF), and the like, or any suitable combination thereof.

In some embodiments, the client and the server may communicate through any currently known or future developed network protocol such as HTTP (Hyper Text Transfer Protocol), and may be interconnected with digital data communication in any form or medium (for example, communication network). Examples of communication networks include a Local Area Network ("LAN"), a Wide Area Network ("WAN"), an extranet (for example, Internet) and an end-to-end network (for example, an ad hoc end-to-end network), as well as any currently known or future developed network.

The above-described computer-readable medium may be included in the above-described controller; or may also exist alone without being assembled into the controller. The above-described computer-readable medium carries one or more programs, and when the one or more programs are executed by the controller, the controller performs the procedure of the above-described replenishment control method.

Further, the computer program code for performing the operations of some embodiments of the present application may be written in one or more programming languages or a combination thereof. The programming languages include object-oriented programming languages, and also include conventional procedural programming languages. The program code may be executed entirely on the user's computer, partly on the user's computer, executed as an independent software package, partly on the user's computer and partly executed on a remote computer, or entirely executed on the remote computer or server. In the case of a remote computer, the remote computer may be connected to the user's computer through any kind of network (including a local area network (LAN) or a wide area network (WAN)), or may be connected to an external computer (for example, connected through Internet using an Internet service provider).

The flowcharts and block views in the accompanying drawings illustrate the possibly implemented architectures, functions, and operations of the system, method, and computer program product according to various embodiments of the present application. In this regard, each block in the flowchart or block view may represent a module, a program segment, or a part of code, wherein the module, the program segment, or the part of code contains at least one executable instruction for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It is also to be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The functions described hereinabove may be performed at least in part by at least one hardware logic component. For example, without limitation, the hardware logic components of a demonstrative type that may be used include: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

Some embodiments of the present application further provide a computer program product including a computer program that, wherein when the computer program is executed by a processor, the above-described replenishment control method is implemented.

The above description is only an explanation of some preferred embodiments of the present application and the applied technical principles. Those skilled in the art should understand that the scope involved in the embodiments of the present application is not limited to the technical solutions formed by the specific combination of the above-described technical features, and at the same time should also cover other technical solutions formed by arbitrarily combining the above-described technical features or equivalent features thereof without departing from the above-described inventive concept. For example, a technical solution formed by replacing the above-described features with the technical features which are similar to the technical features disclosed in the embodiments of the present application (but not limited thereto).

## Claims

1. A replenisher, comprising:
a channel assembly comprising a bottom plate and two side plates, wherein the two side plates are arranged on an upper surface of the bottom plate at intervals to form an article channel for accommodating articles;
a press roller assembly comprising a press roller, a lifting drive mechanism and a rotary drive mechanism, wherein the press roller is arranged above a position of the article channel close to a delivery port, the lifting drive mechanism is configured to adjust a height of the press roller from the article channel, and the rotary drive mechanism is configured to control rotation of the press roller; and
a stopper arranged at the delivery port to block the delivery port, such that the articles are stooped in the article channel;
wherein during a delivery process, the stopper stops blocking, and the press roller is in contact with a surface of the articles in the article channel and rotates to move a specified number of articles in the article channel out of the delivery port.

2. The replenisher according to claim 1, wherein a fixing beam is provided above a position close to the delivery port;
the lifting drive mechanism comprises a rotary drive member, a cam and a swing arm;
the cam is fixed on a spindle of the rotary drive member, and a protruding surface of the cam abuts against the swing arm during a rotation process to control the swing arm to ascend;
one end of the swing arm is hinged to the fixing beam, and the other end is fixed with the rotary drive mechanism and the press roller.

3. The replenisher according to claim 2, wherein the swing arm is L-shaped, the swing arm is hinged to the fixing beam at a corner, and a counterweight is fixed on the swing arm, wherein the press roller is fixed at a longer side end of the swing arm, and a shorter side end of the swing arm is provided with an abutment wheel;
the rotary drive member is fixed on the fixing beam, and the cam is in contact with the abutment wheel to control the swing arm to ascend.

4. The replenisher according to any one of claims 1 to 3, wherein in the two side plates, a first side plate is fixed with the bottom plate, and a second side plate is movably connected with the bottom plate; and
the replenisher also comprises at least one pitch control assembly comprising a support plate and a pitch control driving mechanism, wherein the support plate is fixed with the second side plate to adjust a width of the rack under the action of the pitch control driving mechanism.

5. The replenisher according to claim 4, wherein the pitch control driving mechanism comprises a gantry, a first driving motor and a ball screw pair, wherein the gantry comprises a bracket and a cross beam;
the bracket is fixed on both sides of the bottom plate, and both ends of the cross beam are fixed on the bracket;
both ends of a lead screw in the ball screw pair are fixed on the bracket and located below the cross beam, and a nut in the ball screw pair is sleeved on the lead screw and connected with the support plate;
the first driving motor is fixed on a lower surface of the bottom plate, and a spindle of the first driving motor is connected with one end of the lead screw through a driving belt.

6. The replenisher according to claim 4, wherein the replenisher comprises two pitch control assemblies arranged at the delivery port and a feeding port of the article channel respectively;
the replenisher further comprises a first detection member arranged outside the article channel to detect a change distance of the second side plate.

7. The replenisher according to any one of claims 1 to 6, wherein the stopper is a door panel assembly comprising a door panel and a door panel driving mechanism, wherein the door panel is movably arranged at the delivery port to control an opening and closing of the delivery port under an action of the door panel driving mechanism.

8. The replenisher according to claim 7, wherein a bottom end of the door panel is hinged to an end of the bottom panel located at the delivery port, and a lower surface of the door panel is provided with a mounting plate;
the door panel driving mechanism comprises a second driving motor, a convex ball and an elastic member, wherein the second driving motor is fixed on a lower surface of the bottom plate, the convex ball is arranged at an end of a spindle of the second driving motor, and the convex ball is connected with the mounting plate through the elastic member to control the door panel to flip to realize the opening and closing of the delivery port.

9. The replenisher according to claim 8, wherein a top end of the door panel is provided with a flange with a width that is smaller than a width of the article channel on a docking shelf, wherein the flange on the door panel extends into the article channel of the shelf when the door panel is opened and docked with the shelf;
the delivery port is provided with a limiting support member configured to limit an opening position of the door panel and supporting the opened door panel.

10. The replenisher according to any one of claims 1 to 9, wherein the replenisher further comprises a second detection member, a third detection member and a fourth detection member, which are all arranged at the delivery port;
the second detection member is configured to detect an opening and closing state of the door panel;
the third detection member is configured to detect an information of the articles passing through the delivery port;
the fourth detection member is configured to detect an information of the article channel of the docking shelf.

11. A replenishment system, comprising:
a shelf, on which a plurality of article channels for storing articles are arranged so as to pick up the articles from a front side of the shelf;
at least one replenisher arranged at a rear side of the shelf through a movement mechanism, and configured to replenish the articles to the article channels on the shelf, wherein the replenisher is the replenisher according to any one of claims 1 to 10, and a height of the delivery port of the replenisher is lower than a height of a feeding port, wherein the movement mechanism is configured to drive the replenisher to move along a width direction and a height direction of the shelf.

12. A replenishment control method for the replenisher according to any one of claims 1 to 10, comprising:
controlling the stopper to be in a shielding state and the press roller to be in an ascending state while picking up articles;
controlling the press roller to be in a descending state to press on the first article in the article channel after the articles are picked up;
controlling the stopper to be in a non-shielding state, so as to dock with the article channel of the replenisher with the article channel of the shelf, and controlling the press roller to rotate in a direction away from the delivery port, so as to remove the articles in the article channel from the delivery port while replenishing articles.

13. The replenishment control method according to claim 12, further comprises:
controlling a rotation number of the press roller according to a replenishment number and length dimensions of articles, so as to move the replenishment number of articles to the article channel of a shelf, wherein the length dimensions of the articles are dimensions of the articles in an extending direction of the article channel; and
controlling a second side plate to move according to width dimensions of the articles to be picked up, so that a width of the article channel is greater than widths of the articles to be picked up while picking up articles.

14. A controller, comprising:
at least one processor;
a storage with at least one program stored thereon,
when the at least one program is executed by the at least one processor, the replenishment control method according to claim 12 or 13 is implemented by the at least one processor.

15. A computer-readable medium with a computer program stored thereon, wherein the computer program, when executed by a processor, implements the replenishment control method according to claim 12 or 13.

16. A computer program product comprising a computer program, wherein when the computer program is executed by a processor, the replenishment control method according to claim 12 or 13 is implemented.
